# EUROPEAN PATENT APPLICATION

(11) **EP 0 633 421 A1**
(43) Date of publication of application: **11.01.1995**
(21) Application number: 94304107.9
(22) Date of filing: 08.06.1994
(51) Int. Cl.: F16M 7/00

(54) **A support system for an equipment housing**

(30) Priority: 07.07.1993 US 86917
(71) Applicant: HELENA LABORATORIES CORPORATION, Beaumont Texas 77704-0752 (US)
(72) Inventor: Sarrine, Robert J., Beaumont, Texas 77707 (US)
(74) Representative: W.P. Thompson & Co.

(57) **Abstract**

The present specification discloses a support system for an equipment housing (10), said support system including a pair of screw-adjustable legs (20) at one end (14) of the housing and a pivoting trestle (22) at one end (14) of the housing and a pivoting trestle (22) at the other end. The pivoting trestle is made of two generally U-shaped members, (34,36) one channel member being inverted and inserted or mounted inside the other channel member. The channel members each have side walls (40,44), and a bolt (56) extends through apertures (50,52) in the side walls to pivotally mount one channel with respect to the other. The housing can be made horizontal, i.e., "levelled" by adjusting the effective length of the two legs (20), and the trestle automatically pivots to accommodates adjustment to the legs.

## Description

The present invention relates to a system for supporting a housing on a surface.

More particularly the present invention relates to a support system which can easily be adjusted so that the housing is substantially parallel.

Some equipment, such as medical diagnostic equipment, must be horizontal to achieve optimum performance. The equipment is normally mounted or secured within a housing. Legs are typically used at the four corners of the housing with the length of each leg adjusted as necessary using threaded screw mechanisms to make the housing horizontal.

Most people have experienced the use of unstable tables or chairs -- these devices may be unstable because the chair or table legs are slightly different in length or because the legs rest on an uneven surface. The same problem is present in equipment housings. If an equipment housing has four or more screw-adjustable legs, the length of each leg must be adjusted precisely with respect to the other legs.

A table or chair with three legs would not suffer from this lack of stability. From a geometrical analysis, the table or chair is supported at a fixed distance from each of three points defined by the bottom of the legs. An equipment housing could also be supported with desirable stability if only three screw-adjustable legs were used. However, equipment housings are typically rectangular. If two legs were used adjacent one end and the third leg adjacent the other end of the housing, the third leg would generally support approximately one-half of the total weight assuming that the weight is uniformly distributed within the housing.

An aim of the present invention is to provide a system for supporting an equipment housing so that the equipment housing can easily "levelled", i.e., adjusted to be horizontal.

Another aim is to provide an easy-levelling support system without the disadvantage of using three adjustable-length legs.

According to the present invention there is provided a support system for a housing which housing has first and second ends, the support system characterized by:
an elongated member having a central portion;
means for pivotally connecting the central portion of the elongated member to the housing adjacent the second end thereof so that the elongated member is generally horizontal; and
two adjustable-length legs mounted to the housing adjacent the first end thereof.
Preferably the elongated member includes a first extruded metal channel member and the means for pivotally connecting preferably includes a second extruded metal channel member which is mounted within the first channel member. The channel members have side panels which are pierced by apertures, and an elongated element such as a bolt extends through the apertures to pivotally connect the first channel member to the second channel member. The side panels of the first channel member are preferably machined to reduce their height except in the region of the apertures; this increases the pivot angle that can be achieved.

In a preferred embodiment of the present invention, each elongated member is a first generally U-shaped channel and the means for pivotally connecting includes a second, generally U-shaped channel with the second channel being inverted and pivotally mounted within said first channel.

Further the two adjustable-length legs are preferably aligned substantially parallel to the elongated member.

Also, each elongated member may comprise a floor panel and opposed side panels which are connected to the floor panel, and the central portion of each side panel may be provided with apertures for connecting the channel members together.

The present invention will now be described, by way of example, with reference to the accompanying drawings:-
Fig. 1 is a front elevational view of an equipment housing having an easy-levelling support system constructed according to the present invention;
Fig. 2 is a left side view of the equipment housing and support system shown in Figure 1;
Fig. 3 is a right side view of the equipment housing and support system shown in Figure 1;
Fig. 4 is an exploded view illustrating the channel members of the pivoting trestle utilized in the embodiment of Figs 1 to 3; and
Fig. 5 is a sectional view taken along line V-V of Figure 4.

In the accompanying drawings, an equipment housing 10 has a first end 12 and a second end 14. The equipment mounted in the housing 10 may, for example, be medical diagnostic equipment, weighing perhaps 60 kilograms. In order to avoid adversely affecting the accuracy of the equipment when the equipment is being used, it is desirable for the equipment to be "level", i.e., horizontal.

An easy-levelling support 16 for supporting housing 10 on a surface such as laboratory bench 18 includes a pair of screw-adjustable legs 20 at the second housing end 14 and a pivoting trestle 22 at the first housing end 12.

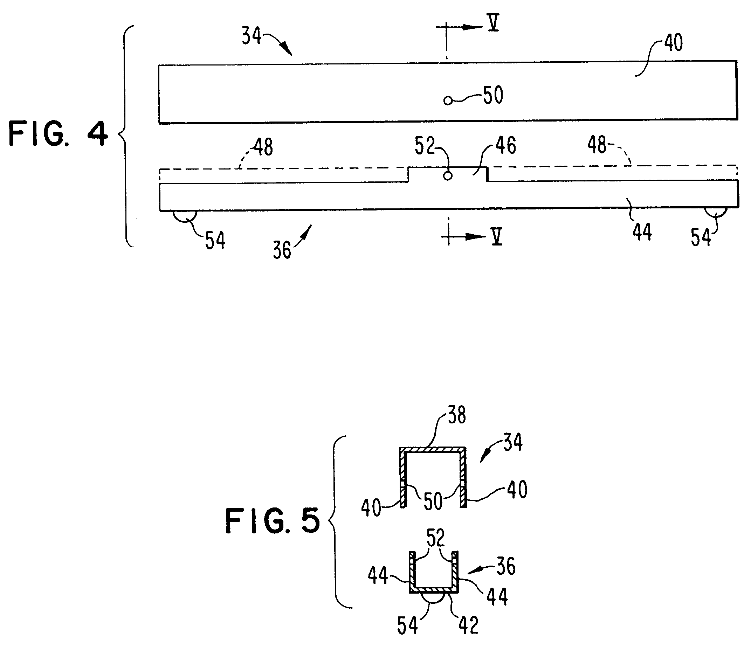

Screw-adjustable legs 20 are commercially available. Each leg 20 includes a threaded shaft 24 and a cup-like foot member 26 which is mounted at the lower end of shaft 24 so as to swivel with respect to shaft 24. A rubber pad 28 is attached to foot member 26 to protect the surface of bench 18 and to additionally keep housing 10 from sliding. A metal block 30 having a threaded bore is affixed inside housing 10. Shaft 24 is threaded into the threaded bore. A nut 32 is affixed to shaft 24 adjacent foot member 26. It will be apparent that nut 32 can be gripped with a wrench to rotate shaft 24 and thereby adjust the effective length of leg 20 beneath housing 10. Pivoting trestle 22 includes a first generally U-shaped channel member 34 and a second, inverted generally U-shaped channel member 36, both of which are made from an extruded metal such as aluminum. Channel member 34 has a floor panel 38 and two side panels 40 and, similarly, channel member 36 has a floor panel 42 and two side panels 44. (See Figure 5.)

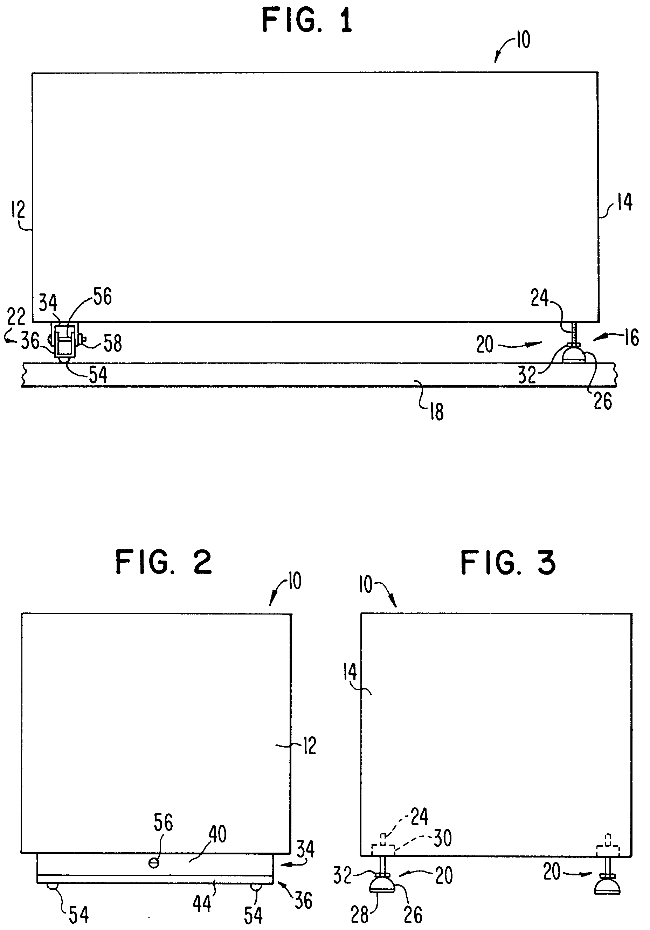

As illustrated in Figure 4, the side panels 44 of channel member 36 have a reduced height except at central portion 46. Dotted lines 48 illustrate portions of a commercially available channel segment that are removed during fabrication of channel member 36.

Apertures 50 are provided in channel member 34 and apertures 52 are provided in side panels 44 of channel member 36 at central portion 46. Rubber pads 54 are adhesively attached to floor panel 42.

As illustrated in Figure 5, the side panels 44 of channel member 36 are closer together than the side panels 40 of channel member 34. This permits channel member 36 to be assembled or mounted interiorly of channel member 34. In this assembled position, a bolt 56 (see Figure 2) having a threaded end region is inserted through apertures 50 and 52 to pivotally mount channel member 36 relative to channel member 34. A nut 58 is threaded onto the bolt 56 to secure the two channels together. Floor panel 38 of channel member 34 is screwed to the bottom of housing 10.

Channel member 34 serves as a mounting element for pivotally mounting channel member 36, and channel member 34 increases the rigidity of housing 10. While it would be possible to assemble a pair of channel members such that the narrower width channel member is on top, in trestle 22 the wider channel member (channel member 34) is on top as illustrated. This is more aesthetically appealing and furthermore avoids an upwardly open crevice between the channel members that would accumulate dust and debris.

To use support system 16, one first adjusts screw-adjustable legs 20 to an initial height and places equipment housing 10 at a desired position in bench 18. If either the front or the rear of housing 10 is too high, one of the legs 20 is adjusted in length, as appropriate, to bring the top of housing 10 to a horizontal "level" condition in the fore-and-aft direction. As this occurs channel member 36 pivots about bolt 56 with respect to channel member 34 and thus housing 10. The cutaway portions identified by dotted lines 48 in Figure 4 increase the degree of pivoting that is available. After housing 10 has been levelled fore-and-aft, it must be levelled left-to-right. This is accomplished by adjusting the length of both legs 20. After left-to-right levelling, the fore-and-aft levelling should be repeated if necessary.

It will be apparent that support system 16 provides the stability of a three-point support; providing two adjustable legs at one end permits housing 10 to be levelled in both the fore-and-aft direction and the left-to-right direction.

It will be understood that the above description of the present invention is susceptible to various modifications, changes, and adaptations, and the same are intended to be comprehended within the meaning and range of equivalents of the appended claims.

The features disclosed in the foregoing description in the following claims and/or in the accompanying drawings may, both separately and in any combination thereof, be material for realizing the invention in diverse forms thereof.

## Claims

1. A support system for a housing (10) which housing has first (12) and second (14) ends, the support system characterized by:
an elongated member (36) having a central portion (46);
means (34, 56) for pivotally connecting the central portion (46) of the elongated member to the housing adjacent the second end (14) thereof so that the elongated member is generally horizontal; and
two adjustable-length legs (20) mounted to the housing adjacent the first end thereof.

2. A support system as claimed in claim 1:
wherein said elongated member (36) is a first generally U-shaped channel and said means for pivotally connecting includes a second, generally U-shaped channel (34);
said second channel being inverted and said first channel is pivotally mounted within said second channel.

3. A support system as claimed in claim 1 or 2, wherein the adjustable-length legs (20) are aligned substantially parallel to the elongated member.

4. A support system as claimed in claim 1, 2 or 3, wherein the elongated member (36) comprises a first extruded metal channel member having a floor panel (42) and opposed side panels (44) which are connected to the floor panel.

5. A support system as claimed in claim 1, 2, 3 or 4, wherein the central portion (46) of the elongated member (36) has side panels (44) with apertures therethrough (52).

6. A support system as claimed in claim 1, 2, 3 or 4, wherein the central portion (46) of the elongated member (36) has side panels (44) with apertures therethrough, and wherein the means for pivotally connecting further comprises a second extruded metal channel member (34) having a floor panel (38) and opposed side panels (40) connected to the floor panel, the second channel member side panels having apertures therethrough (50); and a connector (56) which extends through the apertures in the side panels of the elongated member and the second channel member.

7. A support system as claimed in claim 6, wherein the side panels (44) of the elongated member (36) are spaced apart a lesser distance than the spacing between the side panels (40) of the second channel member (34), and the second channel member (34) is inserted within the elongated member.

8. A support system as claimed in claim 5, 6 or 7, wherein the apertures (52) in the side panels (44) of the elongated member (36) are disposed at the central portion (46) thereof, and wherein the side panels of the elongated member have a reduced height (48) except at said central portion.

9. A support system as claimed in any of the preceding claims, wherein the adjustable-length legs (20) include threaded adjustment means (24, 32).
